# EUROPEAN PATENT APPLICATION

(11) **EP 1 906 567 A1**
(43) Date of publication of application: **02.04.2008**
(21) Application number: 06782376.5
(22) Date of filing: 04.08.2006
(51) Int. Cl.: H04J 11/00, H04B 7/04, H04B 7/06

(54) **RADIO TRANSMITTING APPARATUS, RADIO RECEIVING APPARATUS AND WIRELESS COMMUNICATION METHOD**

(30) Priority: 05.08.2005 JP 2005228447
(71) Applicant: MATSUSHITA ELECTRIC INDUSTRIAL CO., LTD., Osaka 571-8501 (JP)
(72) Inventor: IMAMURA, Daichi Matsushita Electric Industrial Co.,Ltd, 2-1-61, Shiromi, Chuo-ku Osaka 540-6207 (JP); NISHIO, Akihiko Matsushita Electric Industrial Co.,Ltd, 2-1-61, Shiromi, Chuo-ku Osaka 540-6207 (JP); MIYOSHI, Kenichi Matsushita Electric Industrial Co.,Ltd, 2-1-61, Shiromi, Chuo-ku Osaka 540-6207 (JP); YUDA, Yasuaki Matsushita Electric Industrial Co.,Ltd, 2-1-61, Shiromi, Chuo-ku Osaka 540-6207 (JP)
(74) Representative: Zimmer, Franz-Josef
(86) International application number: PCT/JP2006/315518
(87) International publication number: WO 2007/018153

(57) **Abstract**

A radio transmitting apparatus, a radio receiving apparatus and a wireless communication method wherein the channel estimation precision can be improved without increasing the number of pilot signals when two different time-frequency multiplexed physical channel structures are used in an OFDM wireless communication system. A multiplexing part (113) multiplexes, in a previously fixed pattern for each symbol, a pilot symbol generated by a pilot signal generating part (101) ; a D-ch transport data #1 that has been converted to a QPSK modulated symbol by a D-ch first data processing part (102) ; a D-ch transport data #2 that has been converted to a modulated symbol by a D-ch second data processing part (105); and L-ch transport data #1 and #2 that have been converted to modulated symbols by an L-ch data processing part (108) .

## Description

### Technical Field

The present invention relates to a wireless transmitting apparatus and a wireless receiving apparatus and wireless communication method using two different time-frequency multiplexed physical channels in an OFDM (Orthogonal Frequency Division Multiplexing) wireless communication system.

### Background Art

In next mobile communication systems, to improve transmission rate and frequency use efficiency (spectral efficiency), OFDM, M-ary modulation and MIMO (Multiple Input Multiple Output) transmission are considered as candidates of transmission schemes. Moreover, in mobile communication systems, it is necessary to support communications with a stationary terminal up to a terminal moving at high speed (e.g. approximately several hundreds of kilometers per hour).

In this way, to improve transmission efficiency with supporting moving speed in a wide range, studies are being conducted for a physical channel adapted performing two different time-frequency allocations in a mobile communication system using OFDMA scheme, in non-patent document 1.

One is the localized channel (i.e. L-channel) configuration. This channel configuration utilizes continuous frequency bands (i.e. subcarriers) as a physical channel (resource block) and allocates a user that makes throughput improve by frequency scheduling. In addition, a resource block refers to a frequency band consists of a subcarrier or a plurality of subcarriers, and also refers to a unit of frequency scheduling and control unit of for adaptive control.

The other one is the distributed channel (i.e. D-channel) configuration. This channel configuration utilizes discrete frequency bands (i.e. subcarriers) as a physical channel (resource block) and allocates a user that makes throughput improve by frequency diversity gain.

Moreover, for multiplexing these channels, studies are being conducted for time division multiplexing, frequency division multiplexing and time-frequency division multiplexing.

Especially, transmission data allocated to the L-channel is applied for frequency scheduling and adaptive modulation control, so that preferential allocation is given to a user having good channel quality with respect to resource blocks. This increases transmissions using modulation schemes having larger M-ary numbers (from 16 QAM to 64 QAM and from 64 QAM to 256 QAM) and space division multiplexing using multi-antennas (i.e. MIMO-SDM).

However, when modulation schemes having larger M-ary numbers are employed, and when space division multiplexing is applied, reception characteristics are susceptible to time variation of channel response and influence of channel estimation error.

Then, non-patent document 2 discloses a method of reducing channel estimation errors by individually adding a pilot signal to a channel adopting L-channel. Non-patent Document 1: R1-050604 "Downlink Channelization and Multiplexing for EUTRA" 3GPP TSG RAN WG1 Ad Hoc on LTE, Sophia Antipolis, France, 20 - 21 June, 2005.
Non-patent Document 2: R1-050589 "Pilot Channel and Scrambling Code in Evolved UTRA Downlink" 3GPP TSG RAN WG1 Ad Hoc on LTE, Sophia Antipolis, France, 20-21 June, 2005.

### Disclosure of Invention

### Problems to be Solved by the Invention

However, in a technique disclosed in non-patent document 2 above, system throughput is decreased due to inserting a pilot signal instead of data for L-channel. On the other hand, when the number of pilot signals to be inserted, is decreased, larger data transmission is possible, and so it is possible to prevent system throughput from decreasing, however, it may cause to decrease channel estimation accuracy.

It is therefore an object of the present invention to provide a wireless transmitting apparatus, a wireless receiving apparatus and wireless communication method providing an advantage of improving the accuracy of channelestimation withoutincreasingpilotsignals,when two different time-frequency multiplexed physical channels are adopted in wireless communication systems using OFDM.

### Means for Solving the Problem

The transmitting apparatus of the present invention adopts a configuration including: a fixed modulation section that modulates a first channel signal using discrete frequency bands as a physical channel, by a fixed modulation scheme; a multiplexing section that time-frequency multiplexes the first channel signal that is modulated and a second channel signal using continuous frequency bands as a physical channel on a per symbol basis such that the first channel signal and the second channel signal exhibit a prefixed pattern; and a transmitting section that transmits a signal multiplexed in the multiplexing section.

The receiving apparatus of the present invention adopts a configuration including: a receiving section that receives a signal, in which a first channel signal modulated by a fixed modulation scheme and using discrete frequency bands as a physical channel, and a second channel signal using continuous frequency bands as a physical channel, are time-frequency multiplexed on a per symbol basis, such that the first channel signal and the second channel signal exhibit a prefixed pattern; a channel estimation section that performs channel estimation; a first channel compensation section that performs channel compensation for the first channel signal using a channel estimation value; an error detecting section that makes a hard decision of a transmission signal point of the first channel signal subjected to the channel compensation, based on a fixed modulation scheme, and detects an error of the channel estimation value from a hard decision result; and a second channel compensation section that performs channel compensation for the second channel signal using the channel estimation value subjected to the error detected is corrected.

### Advantageous Effect of the Invention

According to the present invention, in wireless communication systems using OFDM, it is possible to improve channel estimation accuracy without increasing a pilot signal, when two different time-frequency multiplexed physical channels are adopted.

### Brief Description of Drawings

FIG.1 is a block diagram showing a transmitting apparatus according to Embodiment 1 of the present invention;
FIG.2 is a block diagram showing a receiving apparatus according to Embodiment 1 of the present invention;
FIG.3 illustrates a multiplexing pattern of the symbols in the multiplexing section shown in FIG.1;
FIG.4 illustrates a situation of channel compensation in D-ch channel compensation section;
FIG.5 illustrates the multiplexing pattern for each symbol;
FIG.6 illustrates the multiplexing pattern for each symbol;
FIG.7 illustrates the multiplexing pattern for each symbol in Embodiment 2;
FIG.8 is a block diagram showing the receiving apparatus according to Embodiment 2 of the present invention;
FIG.9 is a block diagram showing the transmitting apparatus according to Embodiment 3 of the present invention;
FIG.10 illustrates the multiplexing pattern for each symbol in the multiplexing section shown in FIG.9;
FIG.11 is a block diagram showing the receiving apparatus according to Embodiment 3 of the present invention;
FIG.12 illustrates a situation of channel compensation and symbol combining of the duplicated symbols;
FIG.13 is a block diagram showing the transmitting apparatus of Embodiment 4 of the present invention;
FIG.14 shows the multiplexing pattern for each symbol in the demultiplexing section shown in FIG.13;
FIG.15 illustrates the multiplexing pattern transmitted from a first antenna;
FIG.16 illustrates the multiplexing pattern transmitted from a second antenna; and
FIG.17 is a block diagram showing the receiving apparatus of Embodiment 4.

### Best Mode for Carrying Out the Invention

Embodiments of the present invention will be described presuming a system in which a localized channel (hereinafter referred to as "L-channel") and a distributed channel (hereinafter referred to as "D-channel") are time-frequency multiplexed and transmitted.

Embodiments of the present invention will be explained below in detail with reference to the accompanying drawings. In embodiments, the same components having the same functions are assigned the same reference numerals and overlapping descriptions will be omitted.

### (Embodiment 1)

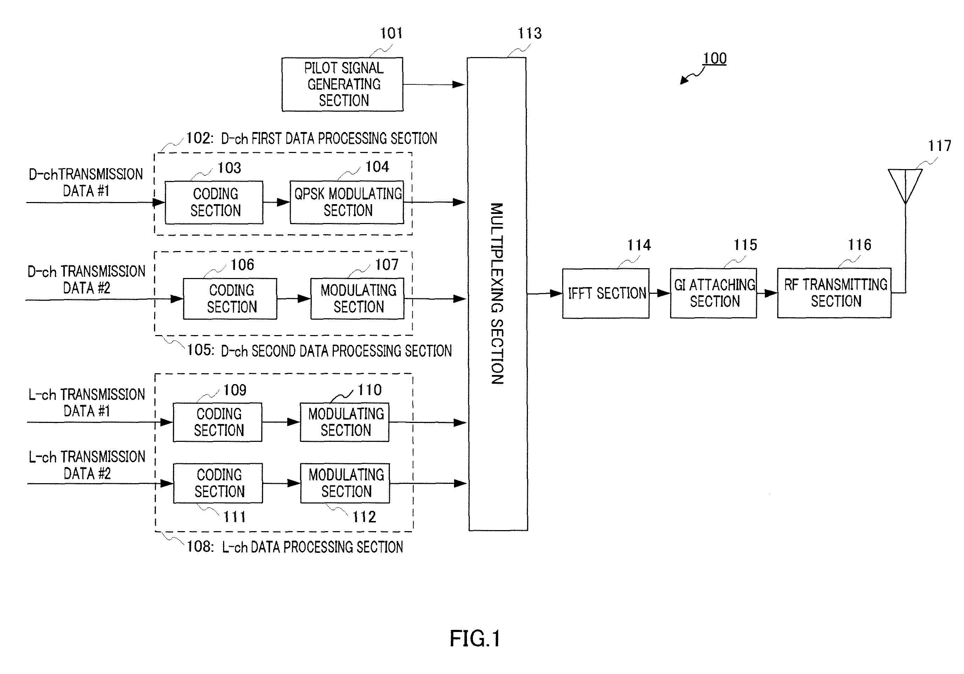

FIG.1 is a block diagram showing the configuration of transmitting apparatus 100 according to Embodiment 1 of the present invention. In this figure, pilot signal generating section 101 generates a pilot symbol and outputs the generated pilot symbols to multiplexing section 113.

D-ch first data processing section 102 is provided with coding section 103 and QPSK modulating section 104, and applies predetermined data processing to the inputted D-channel (i.e. distributed channel) transmission data #1. To be more specific, coding section 103 applies error correction coding processing to the D-channel transmission data #1 and QPSK modulating section 104 as a fixed modulation means converts the signal subjected to the error correction coding processing into QPSK modulated symbol. The QPSK modulated symbols are outputted to multiplexing section 113. A D-channel, for which the modulation scheme is limited to QPSK, will be hereinafter referred to as a "specific D-channel."

D-ch second data processing section 105 is provided with coding section 106 and modulating section 107 and applies predetermined data processing to the inputted D-channel transmission data #2. To be more specific, coding section 106 applies error correction coding processing to the inputted D-channel transmission data #2 and modulating section 107 converts the signal subjected to the error correction coding processing into the QPSK, 16QAM or 64QAM modulated symbol. The modulated symbols are outputted to multiplexing section 113.

L-ch data processing section 108 is provided with coding sections 109 and 111 and modulating sections 110 and 112 and applies predetermined data processing to the inputted L-channel (i.e. localized channel) transmission data #1 and #2. To be more specific, coding section 109 applies error correction coding processing to the inputted L-channel transmission data #1, and modulating section 110 converts the L-channel transmission data #1 subjected to the error correction coding processing into the QPSK, 16QAM or 64QAM modulated symbol. Similarly, coding section 111 applies error correction coding processing to the L-channel transmission data #2, and modulating section 112 converts L-channel transmission data #2 subjected to the error correction coding processing into the QPSK, 16QAM or 64QAM modulated symbol. Each modulating section outputs the modulated symbols to multiplexing section 113.

According to a predetermined multiplexing pattern or according to control information outputted from control sections (not shown), multiplexing section 113 multiplexes the pilot symbols outputted from pilot signal generating section 101, D-channel transmission data #1 outputted from D-ch first data processing section 102, D-channel transmission data #2 outputted from D-ch second data processing section 105 and L-channel transmission data #1 and #2 outputted from L-ch data processing section 108, and outputs the multiplexed signal (i.e. multiplex signal) to IFFT section 114.

By applying an IFFT (Inverse Fast Fourier Transform) to the multiplex signal outputted from multiplexing section 113, IFFT section 114 converts the frequency domain signal into time domain signal. That is, IFFT section 114 frequency-multiplexes the multiplex signal over a plurality of orthogonal subcarriers. The frequency-multiplexed signal is outputted to GI attaching section 115.

GI attaching section 115 attaches a guard interval ("GI") to the signal outputted from IFFT section 114 and outputs the signal with an attachment of a GI to RF transmitting section 116.

RF transmitting section 116 applies predetermined transmission processing including D/A conversion and quadrature modulation (i.e. up-conversion), to the signal outputted from GI attaching section 115, and transmits the signal after the transmission processing through antenna 117.

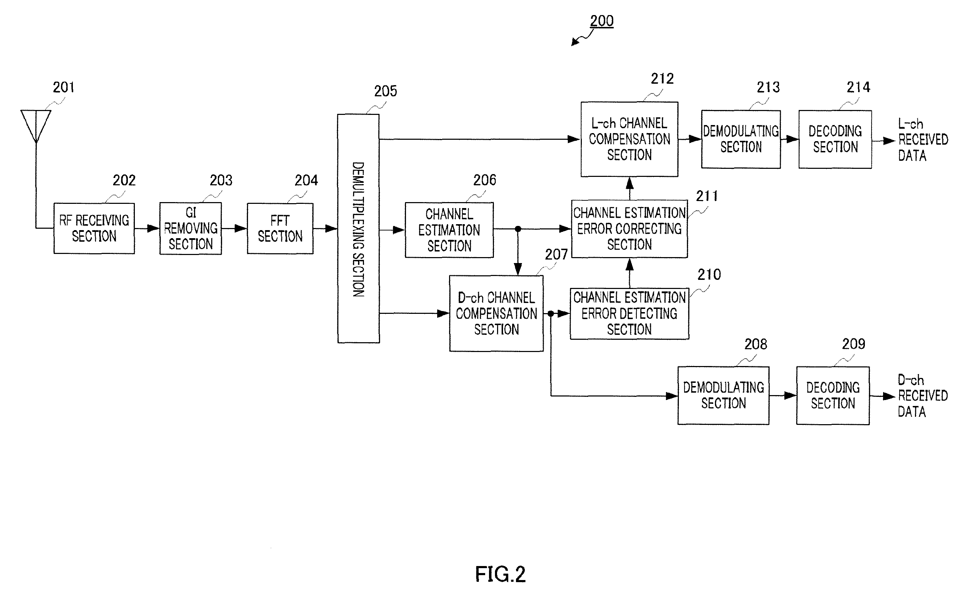

FIG.2 is a block diagram showing receiving apparatus 200 according to Embodiment 1 of the present invention. In this figure, RF receiving section 202 applies receiving processing including quadrature detection (down-conversion) and A/D conversion to a signal transmitted from a communicating party and received via antenna 201, and outputs the signal after receiving processing to GI removing section 203.

GI removing section 203 removes the GI from the signal outputted from RF receiving section 202, and outputs the signal after the GI removal, to FFT section 204. By applying a FFT (Fast Fourier Transform) to the signal outputted from GI removing section 203, FFT section 204 converts the time domain signal into frequency domain signal and outputs the signal after the FFT to demultiplexing section 205.

According to a predetermined multiplexing pattern or according to control information outputted from control sections (not shown), demultiplexing section 205 demultiplexes the signal outputted from FFT section 204 to the pilot symbols, the L-channel symbols and the D-channel symbols, and outputs the pilot symbols to channel estimation section 206, the D-channel symbols to D-ch channel compensation section 207 and the L-channel symbols to L-ch channel compensation section 212.

Channel estimation section 206 performs channel estimation using the pilot symbols outputted from demultiplexing section 205 and outputs a channel estimation values as an estimation result to D-ch channel compensation section 207 and channel estimation error correcting section 211.

D-ch channel compensation section 207 compensates for the channel distortion of the D-channel symbols outputted from demultiplexing section 205 using the channel estimation values outputted from channel estimation section 206, and outputs the D-channel symbols subjected to channel distortion compensation to demodulating section 208 and channel estimation error detecting section 210.

Demodulating section 208 makes a signal point decision by making a hard decision or a soft decision of the D-channel symbols outputted from D-ch channel compensation section 207 and outputs the decision result to decoding section 209. Decoding section 209 applies error correction processing to the decision result outputted from demodulating section 208 and outputs received data of the D-channel.

Based on a specific, QPSK-modulated D-channel symbols (D-channel #1) out of the D-channel symbols outputted from D-ch channel compensation section 207, channel estimation error detecting section 210 detects the error component of the channel estimation values (hereinafter "channel estimation error") and outputs the detected channel estimation error to channel estimation error correcting section 211.

Channel estimation error correcting section 211 corrects the channel estimation values outputted from channel estimation section 206 using the channel estimation error outputted from channel estimation error detecting section 210 and outputs the corrected channel estimation values to L-ch channel compensation section 212.

L-ch channel compensation section 212 compensates for the channel distortion of the L-channel symbols outputted from demultiplexing section 205 using channel estimation values outputted from channel estimation error correcting section 211 and outputs the L-channel symbols subjected to channel distortion compensation to demodulating section 213.

Demodulating section 213 makes a signal point decision by making a hard decision or a soft decision of the L-channel symbols outputted from L-ch channel compensation section 212 and outputs the decision result to decoding section 214. Decoding section 214 applies error correction processing to the decision result outputted from demodulating section 213 and outputs received data of the L-channel.

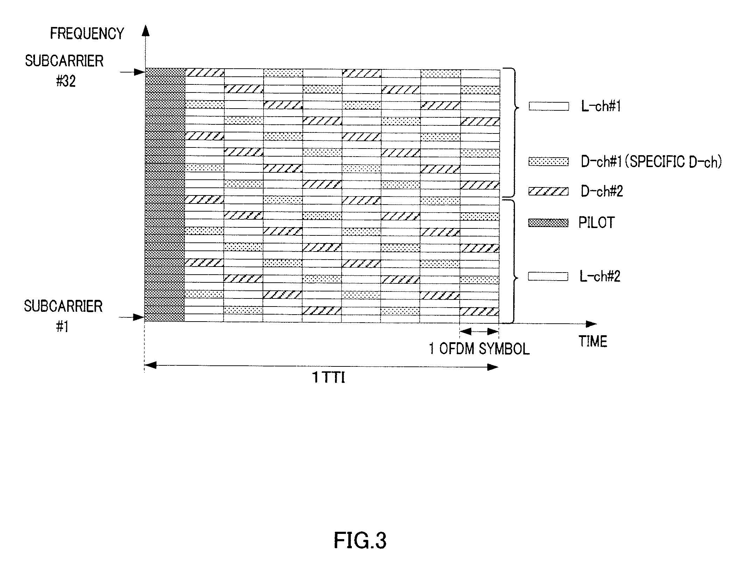

Here, the multiplexing pattern for each symbol in multiplexing section 113 shown in FIG.1 will be explained. Multiplexing section 113 time-frequency multiplexes the symbols of the pilot, the specific D-channel (D-channel #1), the D-channel #2, the L-channel #1 and the L-channel #2, as shown in FIG.3. In FIG.3, the vertical axis is frequency (i.e. the number of subcarriers) and the horizontal axis is time (i.e. the number of OFDM symbols), where the number of subcarriers is 32 and the number of OFDM symbols included in a transmit time interval (i.e. TTI) for mapping transmission data is 9, showing a case where the two D-channels and the two L-channels are multiplexed.

In the multiplexing pattern shown in FIG.3, the pilot symbols are mapped upon all subcarriers (i.e. subcarriers #1 to #32) of the leading OFDM symbol. Moreover, the D-channel #2 is mapped to subcarrier #32 in the second OFDM symbol, and the D-channel #1 and the D-channel #2 are mapped alternately every time the subcarrier number decreases four. L-channel #2 is mapped to the rest of the subcarriers of subcarriers #1 to #16, and L-channel #1 is mapped to the rest of the subcarriers of subcarriers #17 to #32.

With regards to the third OFDM symbol and onward, the second D-channel #1 and D-channel #2 are mapped to subcarriers cyclic-shifted in descending order of subcarrier numbers every two subcarriers. In addition, the L-channel #1 is mapped to the domain other than where the D-channels are mapped in subcarriers #17 to #32, and the L-channel #2 is mapped to the domain other than where the D-channels are mapped, in subcarriers #1 to #16.

By this means, transmitting apparatus 100 and receiving apparatus 200 share in advance multiplexing patterns of the D-channels and the L-channels and the mapping position of the specific D-channel, so that transmitting apparatus 100 does not need to report these items of information to receiving apparatus 200 and receiving apparatus 200 can utilize the specific D-channel symbols for channel estimation. Moreover, the multiplexing pattern of the D-channels and the L-channels is determined in advance, so that the size of L-channel transmission data does not change, and, consequently, transmission processing and receiving processing can be prevented from being complicated. Moreover, transmission data that can be used as a pilot is mapped to the specific D-channel, so that system throughput can be prevented from decreasing.

Here, transmission data to be mapped to the specific D-channel includes user data which shows relatively poor channel quality and which is transmitted to terminals of high moving speed, multicast data, broadcast data, multicast control information and broadcast control information, which are transmitted to a plurality of terminals.

Next, the operations of receiving apparatus 200 shown in FIG.2 will be explained. In this case, data for this receiving apparatus 200 is mapped to the L-channels. The signal received at antenna 201 is processed in RF receiving section 202, GI removing section 203 and FFT section 204, in order, and, in demultiplexing section 205, demultiplexed into the pilot symbols, the specific D-channel symbols, the D-channel #2 symbols and the L-channel symbols.

The demultiplexed pilot symbol is used for channel estimation in channel estimation section 206 to calculate a channel estimation value.

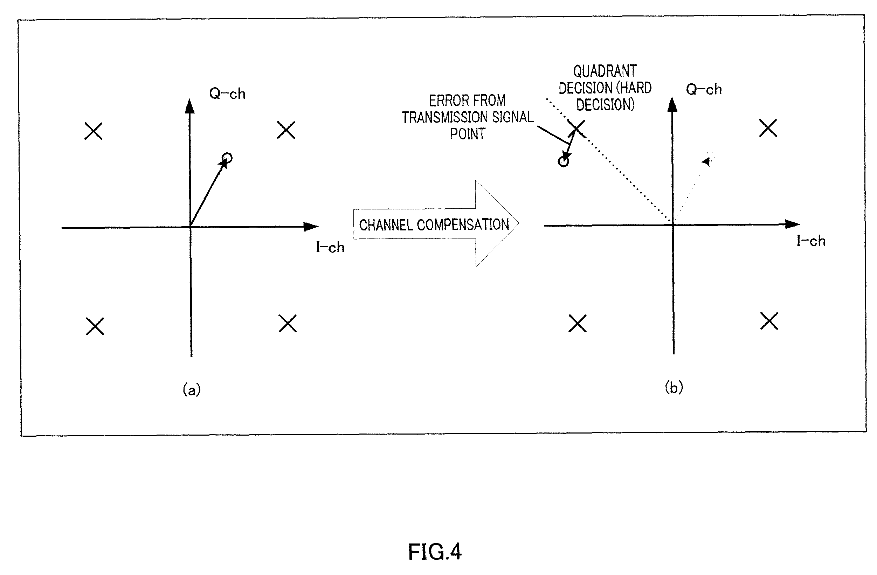

D-ch channel compensation section 207 compensates the channel distortion of the specific D-channel symbols on a per symbol basis using the channel estimation values calculated by channel estimation section 206. FIG.4 shows this situation. FIG.4(a) shows a case where a received symbol of the specific D-channel before channel compensation is positioned in the first quadrant, and, by channel compensation, as shown in FIG.4(b), the received symbol is positioned in the second quadrant.

Channel estimation error detecting section 210 makes a hard decision of the channel estimation value subjected to channel compensation and decides from which the signal point of the quadrant the D-channel symbol is transmitted. Then, the difference between the transmission signal point in the quadrant subjected to hard decision and the received symbol after channel compensation is calculated as the error of the channel estimation value, that is, the channel estimation error. In the case of FIG.4(b), as described above, the received symbol after channel compensation is positioned in the second quadrant and is decided to have been transmitted from a signal point in the second quadrant, and so the amount shown with an arrow is detected as channel estimation error.

Based on the channel estimation error detected using the specific D-channel, channel estimation error detecting section 210 performs frequency domain and time domain interpolation processing with respect to the channel estimation error of subcarriers where the D-channels other than the specific D-channel, and L-channels are mapped. In addition, the interpolation processing may employ linear interpolation, spline interpolation or high-order interpolation algorithm.

Channel estimation error correcting section 211 corrects the channel estimation values estimated by using the pilot signals per subcarrier using the channel estimation error.

L-ch channel compensation section 212 performs channel compensation for received data mapped in the L-channels for the receiving apparatus 200, using the channel estimation values subjected to channel estimation error correction, and demodulating section 213 and decoding section 214 process in order the received data subjected to channel compensation.

By this means, according to Embodiment 1, by determining the multiplexing pattern of the L-channels and the D-channels in advance and fixing the modulation scheme for the D-channel mapped to a predetermined positions to QPSK, signaling for reporting the mapping positions and the modulation scheme for the D-channel to the receiving apparatus is not necessary, so that throughput can be improved.

Moreover, in the receiving apparatus, by detecting channel estimation error using the D-channel where the modulation scheme is fixed to QPSK, the accuracy of channel estimation error detection can be improved, and, furthermore, by performing channel compensation for the L-channels assigned to the receiving apparatus using the detected channel estimation error, it is possible to follow the time fluctuation and frequency fluctuation in channel response and improve L-channels receiving characteristics.

Moreover, by using the D-channel where the modulation scheme is fixed to QPSK as a pilot, the number of inserted pilots decreases, so that throughput can be improved and channel estimation accuracy can be improved.

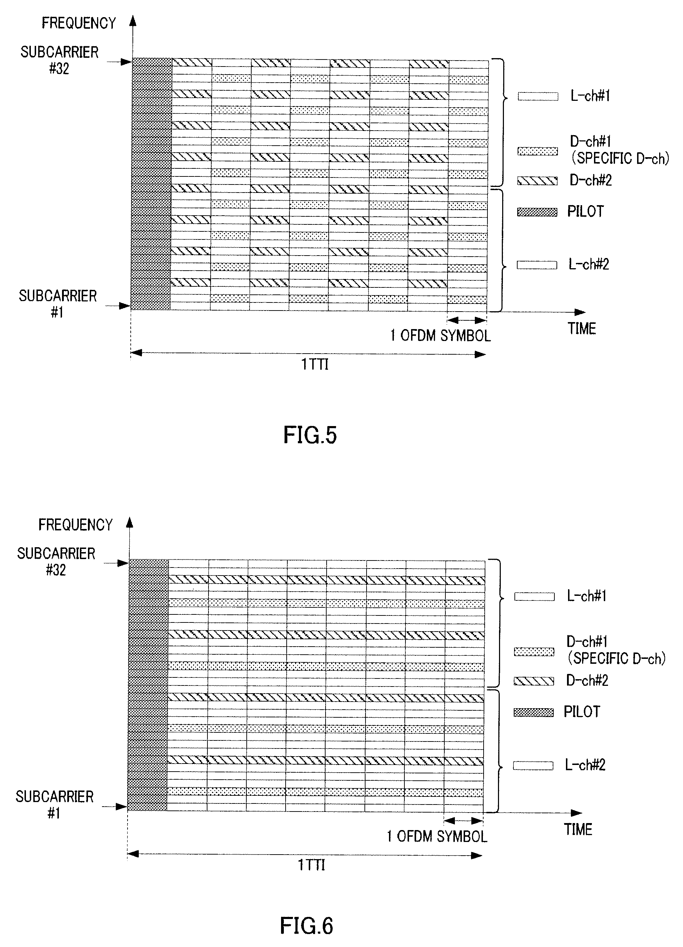

The D-channels need to be multiplexed so as to be inserted in subcarriers and an OFDM symbol where L-channel symbols are mapped, so that the mapping patterns shown in FIGs.5 and 6 are applicable and random mapping patterns may also be applicable if they are known in advance . Moreover, the mapping positions for the specific D-channel may be the whole of the transmission band or part of the frequency band.

### (Embodiment 2)

The configuration of Embodiment 2 according to the present invention is the same as shown in FIG.1 and with referring to FIG.1, the explanation in detail will be omitted. However, QPSK modulating section 104 repeats outputting the same data a predetermined number of times. A case will be explained here where the number of repetitions is one at the first output and the number of repetitions is two (i.e. output twice).

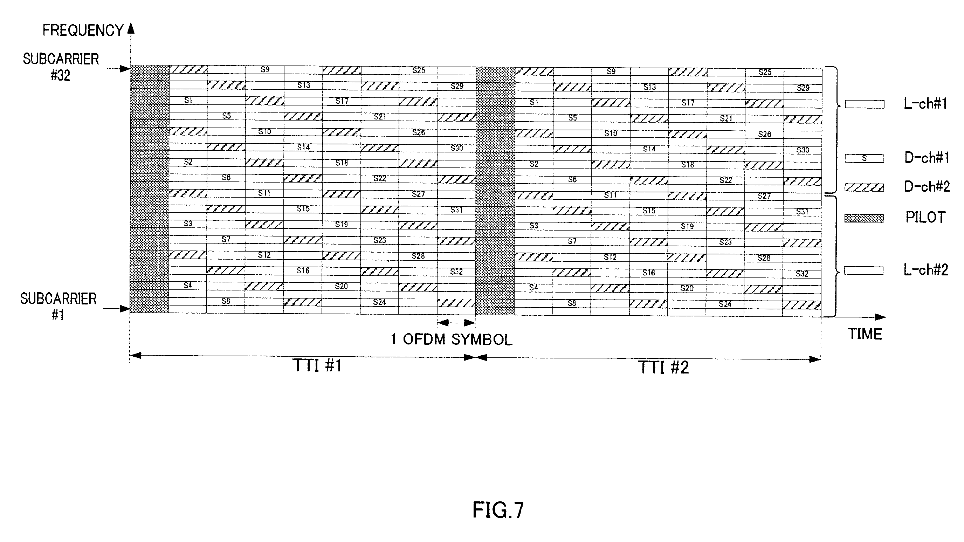

Here, FIG.7 shows the multiplexing pattern for each symbol in multiplexing section 113 shown in FIG.1. FIG.7 shows that the multiplexing pattern is arranged in repetition in the time domain. In particular, as to the specific D-channel, the same data is arranged in repetition over two TTI' s (i.e. TTI #1 and TTI #2). That is, the same data as mapped to TTI #1 (S1 to S32) is mapped to TTI #2. In addition, similar to TTI #1, transmission data is mapped to the D-channel #2 and the L-channels in TTI #2.

By this means, the transmitting apparatus and the receiving apparatus share in advance the multiplexing pattern for the D-channels and the L-channels, the mapping positions for the specific D-channel symbols, and the number of repetitions N for the transmission data assigned to the specific D-channel, so that the transmitting apparatus does not need to report these items of information to the receiving apparatus and the receiving apparatus can utilize the specific D-channel symbols for channel estimation.

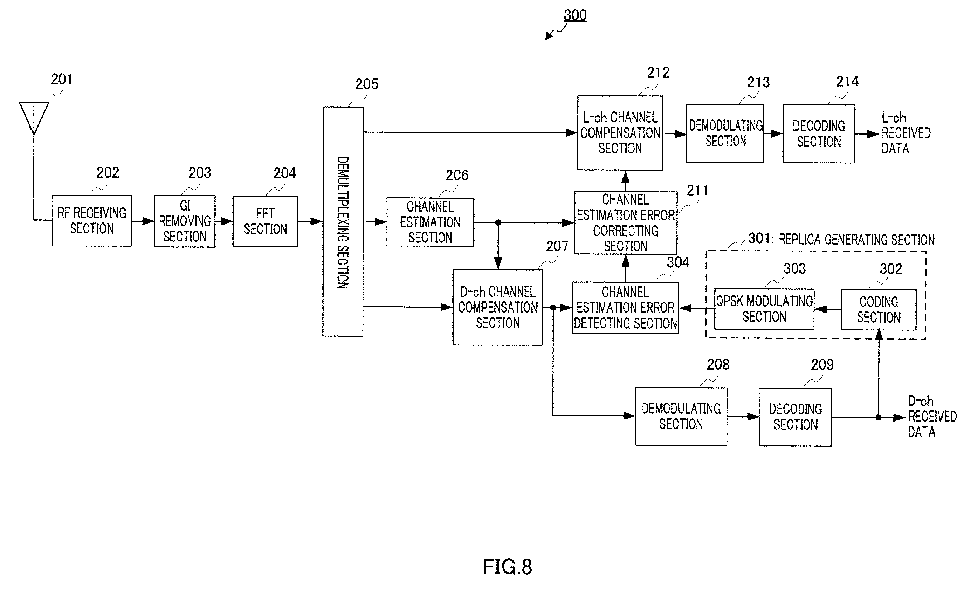

FIG.8 is a block diagram showing the configuration of receiving apparatus 300 according to Embodiment 2 of the present invention. FIG.8 is different from FIG.2 in that replica generating section 301 is added and channel estimation error detecting section 210 is changed to channel estimation error detecting section 304. In addition, replica generating section 301 is provided with coding section 302 and QPSK modulating section 303.

In FIG.8, decoding section 209 performs error correction coding processing with signal point decision results outputted from demodulating section 208 and obtains the received data of the specific D-channel . At this time, when error is not found in the received data of the specific D-channel, decoding section 209 outputs the obtained received data of the specific D-channel to replica generating section 301, and when error is found in the received data, decoding section 209 stops output to replica generating section 301.

Replica generating section 301 generates a replica of the transmitting symbols of the specific D-channel out of the received data of the specific D-channel outputted from decoding section 209, and outputs the generated replica to channel estimation error detecting section 304. To be more specific, as in the case of generating the specific D-channel symbols in the transmitting apparatus, coding section 302 applies error correction coding to the received data of the specific D-channel, QPSK modulating section 303 converts the signals subjected to the error correction coding processing into QPSK modulated symbols and outputs the QPSK modulated symbols as a replica of the transmission symbols, to channel estimation error detecting section 304.

When channel estimation error detecting section 304 processes the specific D-channel multiplexed in TTI #1, based on the specific D-channel symbols subjected to channel compensation, channel estimation error detecting section 304 detects the error component of the channel estimation values and outputs the detected channel estimation error, to channel estimation error correcting section 211.

Moreover, when channel estimation error detecting section 304 processes the specific D-channel multiplexed in TTI #2, as long as error is not found in the received data of the specific D-channel multiplexed in TTI #1, channel estimation error detecting section 304 detects the channel estimation error using the replica outputted from replica generating section 301. Upon a second channel estimation error detection for the specific D-channel, the transmission signal point of the data symbols transmitted at the first time is already known, so that quadrant decision errors can be reduced and consequently the accuracy of channel estimation error detection can be improved. Incidentally, as to channel estimation error detection using a replica, a well-known method is disclosed, for example, in Japanese Patent Application Laid-Open No.2001-069117.

When error is found in received data of the specific D-channel multiplexed in TTI #1, the specific D-channel multiplexed in TTI #2 is processed in the same way as in TTI #1 to detect channel estimation error.

By this means, according to Embodiment 2, when the specific D-channel data is decoded without error in the receiving apparatus that receives data transmitted in repetition by the specific D-channel, a replica is generated from the received data without error, and, detecting channel estimation error by using the generated replica and the specific D-channel data transmitted after the received data without error can make the accuracy of channel estimation error detection further improve.

Moreover, although a case has been described with the present embodiment above where data mapped to the specific D-channel is repeated over two TTI' s, the present invention is not limited to this and mapping over two TTI's or more is also possible.

Moreover, with the present embodiment, when the same transmission data of the specific D-channel is transmitted in repetition by a plurality of TTI's, the mapping position for the specific D-channel is the same. However, the present invention is not limited to this, and the mapping positions for the specific D-channel may be changed every time transmission is repeated, and, in this case, the transmitting apparatus and the receiving apparatus need to share in advance the mapping positions for the specific D-channel.

Moreover, the receiving apparatus of the present embodiment performs symbol combining or likelihood combining for received symbols of the specific D-channel obtained at the first time and for received symbols obtained in repetition, so that, even when error is detected in the received data of the specific D-channel obtained at the first time, it is more likely to have received data without error, whenever the specific D-channel is obtained. By this means, even the receiving apparatus which M-ary modulations including 16 QAM and 64QAM are not applicable due to fast time variation for channel response, can receive the data to which 16 QAM or 64 QAM are applied.

### (Embodiment 3)

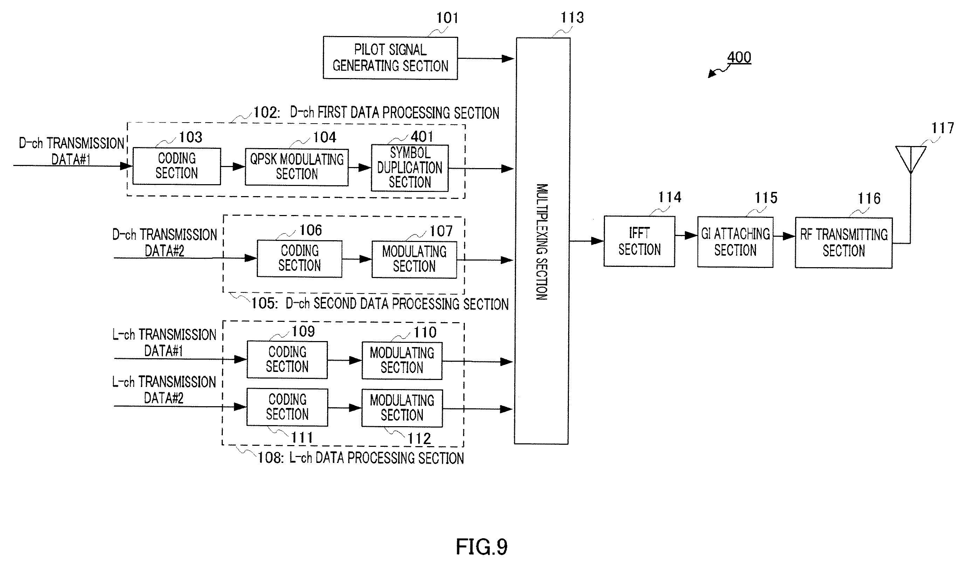

FIG.9 is a block diagram showing the configuration of transmitting apparatus 400 of Embodiment 3 of the present invention. FIG.9 is different from FIG.1 in that symbol duplication section 401 is added. In FIG.9, symbol duplication section 401 duplicates QPSK modulated symbol outputted from QPSK modulating section 104 by the number of a plurality of symbols, and outputs a plurality of duplicated QPSK modulated symbols to multiplexing section 113.

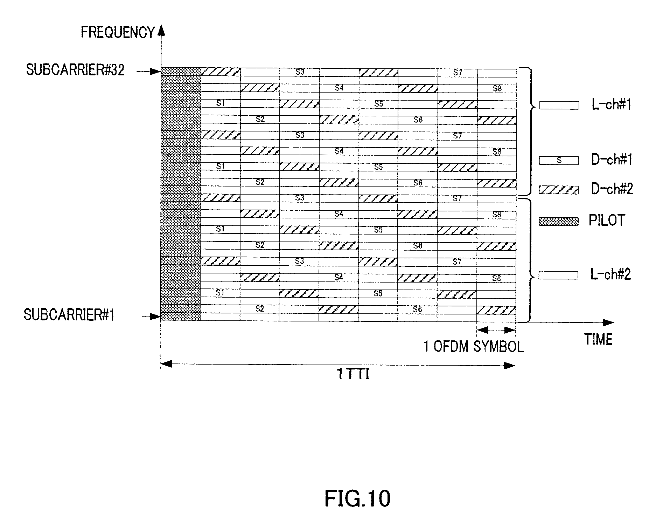

FIG.10 shows the multiplexing pattern for each symbol in multiplexing section 113 shown in FIG.9. FIG.10 shows that in the specific D-channel mapping positions in the multiplexing pattern shown in FIG.3, the same symbols (i.e. duplicated symbols) are mapped in the same OFDM symbol. That is, multiplexing section 113 maps the same symbols to different subcarriers in the same OFDM symbol. Moreover, FIG.10 shows that different symbols are mapped to each OFDM symbol. To be more specific, symbols S1 are mapped to the second OFDM symbol and symbols S2 are mapped to the third OFDM symbol, the order continuing up to symbols S8 that are mapped in the ninth OFDM symbol.

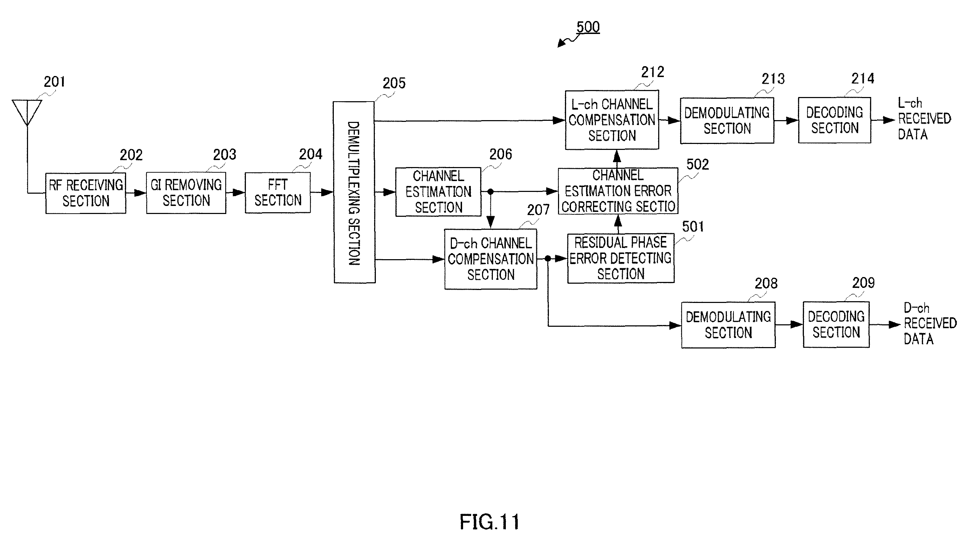

FIG.11 is a block diagram showing the configuration of transmitting apparatus 500 of Embodiment 3 of the present invention. FIG.11 is different from FIG.2 in that residual phase error detecting section 501 is added and channel estimation error correcting section 211 is changed to channel estimation error correcting section 502.

In FIG.11, based on the duplicated specific D-channel symbol out of the D-channel symbols outputted from D-ch channel compensation section 207, residual phase error detecting section 501 detects residual phase error such as phase correction error by AFC (Automatic Frequency Control) and phase error produced by phase noise, and outputs detected residual phase error to channel estimation error correcting section 502.

Channel estimation error correcting section 502 corrects the channel estimation values of each subcarrier on a per OFDM symbol basis using the residual phase error outputted from residual phase error detecting section 501.

Next, the operations of receiving apparatus 500 shown in FIG.11 will be explained. The overlapping explanation that has explained in Embodiment 1 will be omitted.

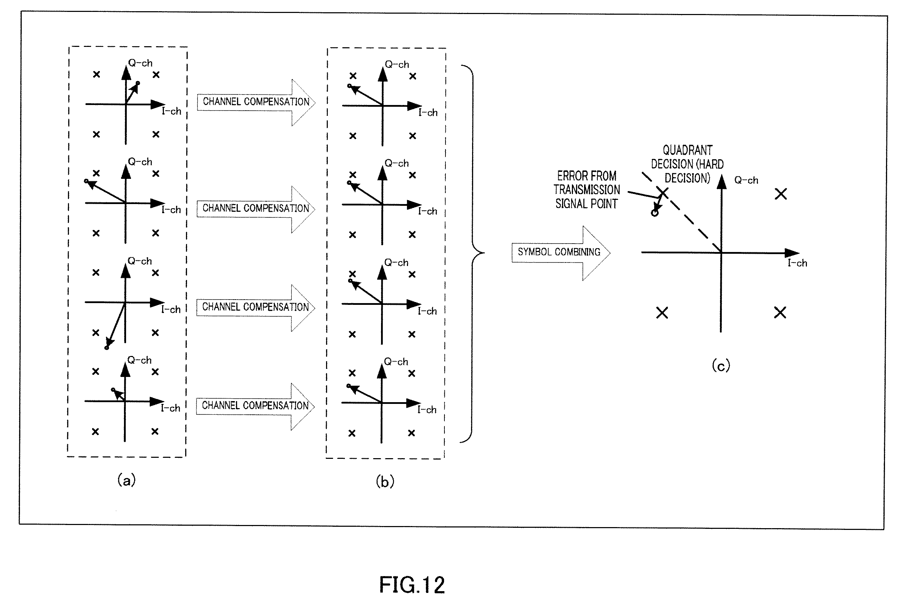

D-ch channel compensation section 207 corrects the channel distortion of the specific D-channel symbols on a per symbol basis using the channel estimation values calculated by channel estimation section 206. FIG.12 shows this situation. FIG.12(a) shows signal points of duplicated symbols transmitted in the same OFDM symbol and FIG.12(b) shows signal points of duplicated symbols subjected to channel compensation.

Residual phase error detecting section 501 performs symbol combining including maximum ratio combining or equal gain combining for the duplicated symbols subjected to channel compensation in D-ch channel compensation section 207. FIG.12(c) shows this situation. The residual phase error has the same variation to all subcarriers, so that, by symbol combining between duplicated symbols, detecting accuracy of residual phase error can be improved.

Residual phase error detecting section 501 makes a hard decision of the signal point subjected to symbol combining and decides from which signal point in which quadrant the duplicated symbol is transmitted. Then, the difference between the transmission signal point in the quadrant subjected to hard decision and the signal point after the symbol combining is detected as the residual phase error, that is, the channel estimation error. In the case of FIG.12(c), hard decision is made that the transmission is performed from a signal point in the second quadrant and the amount shown in an arrow is detected as the residual phase error.

Channel estimation error correcting section 502 corrects the channel estimation values of each subcarrier on a per OFDM symbol basis, using the residual phase error of each OFDM symbol detected in residual phase error detecting section 501.

By this means, according to Embodiment 3, symbols mapped in the specific D-channel of the same OFDM symbol are set as the duplicated same symbol and the receiving apparatus performs symbol combining for the duplicated symbols subjected to channel compensation and detects the residual phase error, so that it is possible to accurately compensate for phase error produced by phase noise of frequency synthesizer and for residual phase error that cannot be compensated for enough by AFC, thereby improving reception characteristics. Especially, it is possible to improve reception characteristics of data modulated by M-ary modulation such as 16 QAM and 64 QAM, where phase error is likely to cause reception characteristics degradation.

Moreover, although a case has been described with the present embodiment where the duplicated symbols are mapped in one OFDM symbol, the present invention is not limited to this, and the number of duplicated symbols may be increased and the same symbols may be mapped in a plurality of OFDM symbols. For example, eight of the same symbols including the original QPSK modulated symbols may be mapped in two different OFDM symbols, that is, four symbols per OFDM symbol.

### (Embodiment 4)

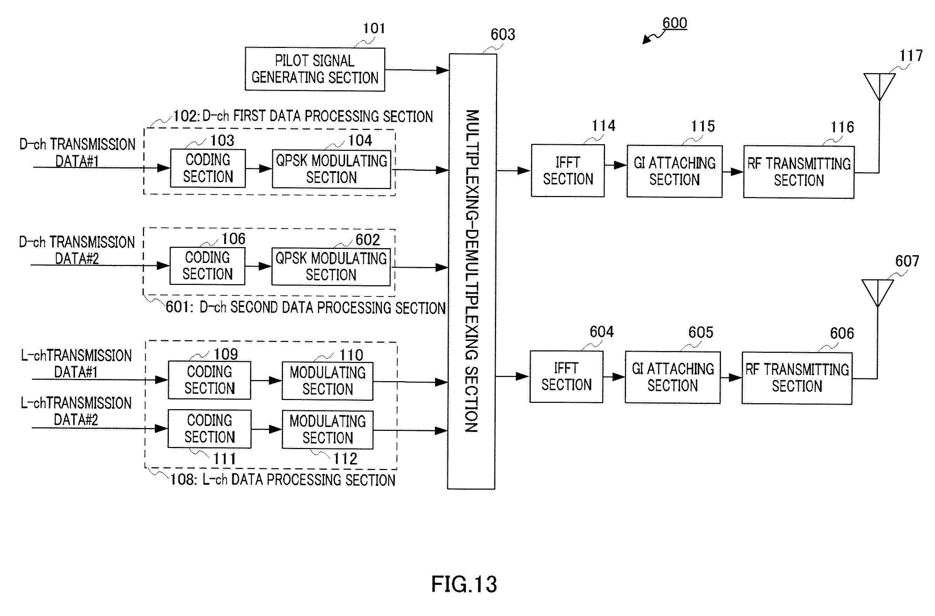

FIG.13 is a block diagram showing the configuration of transmitting apparatus 600 of Embodiment 4 of the present invention. In addition, FIG.13 is different from FIG.1 in that D-ch second data processing section 105 is changed to D-ch second data processing section 601, multiplexing section 113 is changed to multiplexing-demultiplexing section 603, and IFFT section 604, GI attaching section 605, RF transmitting section 606 and antenna 607 are added. In addition, D-ch second data processing section 601 is provided with coding section 106 and QPSK modulating section 602.

In FIG.13, similar to D-ch first data processing section 102, in D-ch second data processing section 601, coding section 106 applies error correction coding processing to the inputted D-channel transmission data #2 and QPSK modulating section 602 converts the signal subjected to the error correction coding processing into the QPSK modulated symbol. The QPSK modulated symbol is outputted to multiplexing-demultiplexing section 603.

According to a predetermined multiplexing pattern or according to control information outputted from control sections (not shown), multiplexing-demultiplexing section 603 multiplexes the pilot symbol and each symbol of the D-channel transmission data #1, the L-channel transmission data #1 and the L-channel transmission data #2 for antenna 117 (hereinafter "first antenna 117"),and multiplexes the pilot symbol and each symbol of D-channel transmission data #2, the L-channel transmission data #1 and the L-channel transmission data #2 for antenna 607 (hereinafter "second antenna 607"). That is, the D-channel transmission data #1 is separated for first antenna 117 and the D-channel transmission data #2 is separated for second antenna 607. The first multiplexed signals, which the D-channel transmission data #1 is separated, are outputted to IFFT section 114 and the second multiplexed signals, which the D-channel transmission data #2 is separated, are outputted to IFFT section 604, respectively.

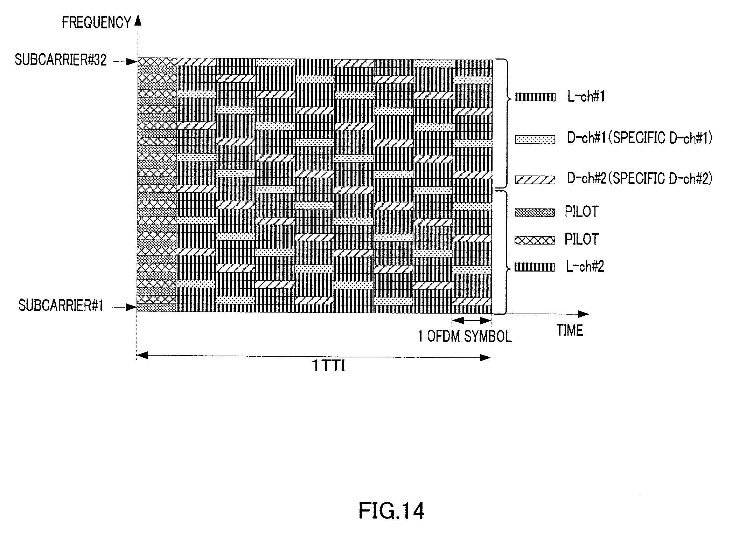

FIG.14 shows the multiplexing pattern for each symbol in multiplexing-demultiplexing section 603 shown in FIG.13. In this multiplexing pattern, the pilot symbols are mapped upon all subcarriers (subcarriers #1 to #32) of the leading OFDM symbol, the subcarriers of odd numbers are separated for the first antenna and the subcarriers of even numbers are separated for the second antenna. Moreover, the multiplexing pattern for the second OFDM symbol and onward is the same as in FIG.3 but is different from FIG.3 in that the D-channel #1 is separated for the first antenna and the D-channel #2 is separated for the second antenna.

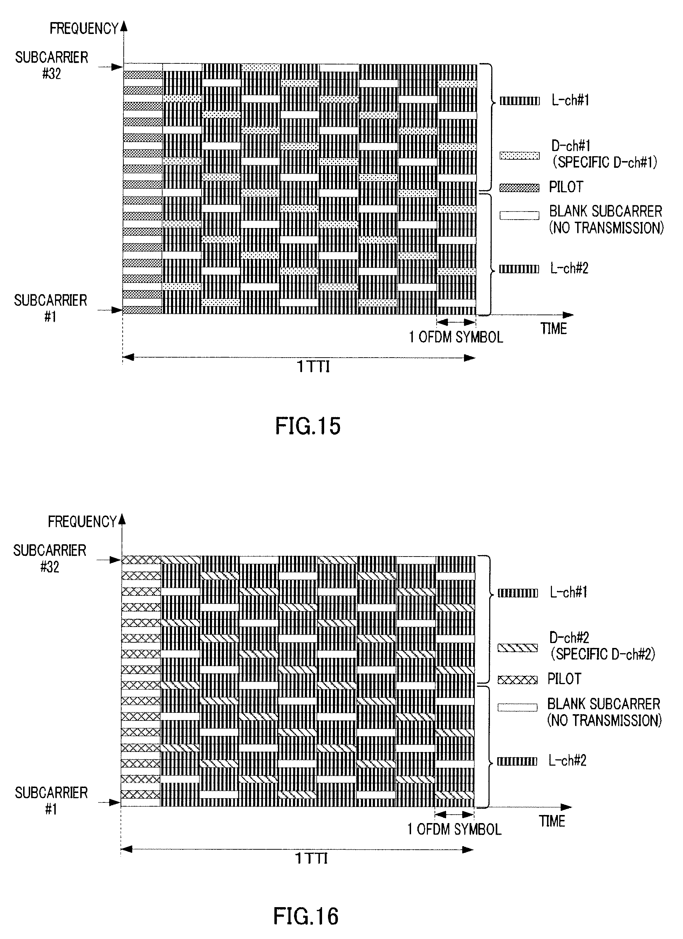

FIGs.15 and 16 show situations where multiplexing patterns are separated on a per antenna basis. FIG.15 is the multiplexing pattern transmitted from the first antenna and FIG.16 is the multiplexing pattern transmitted from the second antenna. In this way, the transmitting apparatus sets the specific D-channels transmitted from only one antenna for the number of antennas. Here, the number of antennas is two and the specific D-channels are divided into the D-channel #1 and the D-channel #2. In addition, the L-channels are assumed to be transmitted in MIMO-SDM.

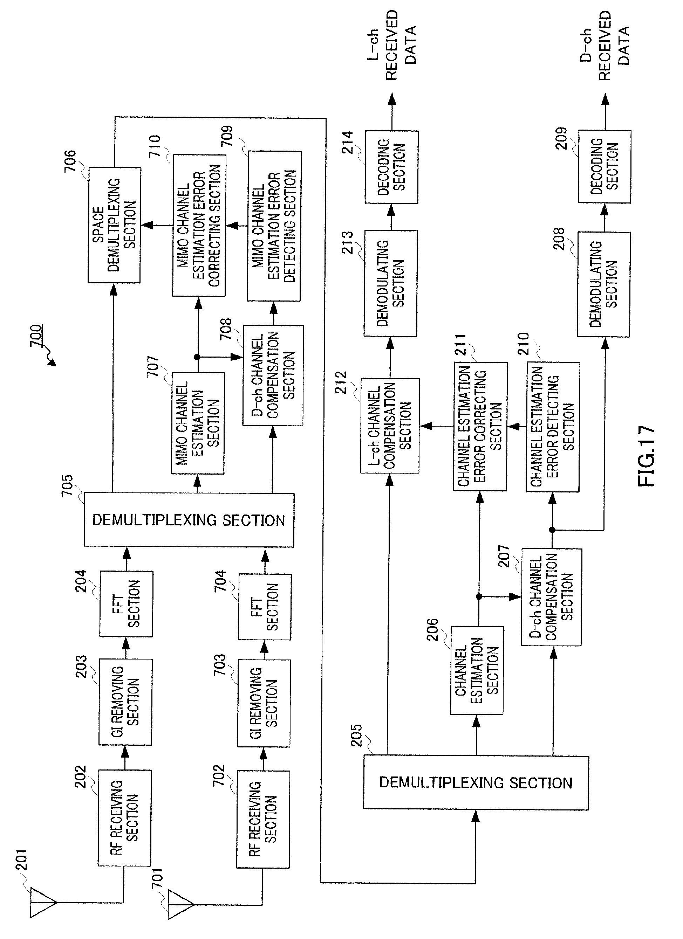

FIG.17 is a block diagram showing the configuration of receiving apparatus 700 according to Embodiment 4 of the present invention. FIG.17 is different from FIG.2 in having additions of antenna 701, RF receiving section 702, GI removing section 703, FFT section 704, demultiplexing section 705, space demultiplexing section 706, MIMO channel estimation section 707, D-ch channel compensation section 708, MIMO channel estimation error detecting section 709 and MIMO channel estimation error correcting section 710.

The received signals received by antenna 701 are processed in order by RF receiving section 702, GI removing section 703 and FFT section 704 and is outputted to demultiplexing section 705.

Demultiplexing section 705 outputs the signals received via antenna 201 and converted from time domain signals to frequency domain signals by FFT section 204, and the signals received via antenna 701 and converted from time domain signals to frequency domain signals by FFT section 704, to space demultiplexing section 706. On the other hand, demultiplexing section 705 demultiplexes these signals into the signals transmitted in MIMO, the pilot signals, the D-channel #1 and the D-channel #2. The pilot signals are outputted to MIMO channel estimation section 707, and the D-channel #1 and the D-channel #2 are outputted to D-ch channel compensation section 708.

Using the pilot symbols outputted from demultiplexing section 705, MIMO channel estimation section 707 performs channel estimation (h11) for the propagation path transmitted from transmitting antenna 117 and arriving at receiving antenna 201, channel estimation (h12) for the propagation path transmitted from transmitting antenna 117 and arriving at receiving antenna 701, channel estimation (h21) for the propagation path transmitted from transmitting antenna 607 and arriving at receiving antenna 201, and channel estimation (h22) for the propagation path transmitted from transmitting antenna 607 and arriving at receiving antenna 701, and outputs the channel estimation values (h11, h12, h21 and h22) as estimation results to D-ch channel compensation section 708 and MIMO channel estimation error correcting section 710.

D-ch channel compensation section 708 compensates for the channel distortion of the received data symbols of the D-channel #1 and the D-channel #2 using the channel estimation values outputted from MIMO channel estimation section 707 and outputs the received symbols subjected to channel distortion compensation to MIMO channel estimation error detecting section 709.

Based on the specific, QPSK-modulated D-channel symbols (D-channel #1 and D-channel #2) out of the received data symbols outputted from D-ch channel compensation section 708, MIMO channel estimation error detecting section 709 detects the error components (h11', h12', h21' and h22') of the channel estimation values of the propagation paths and outputs the detected channel estimation errors to MIMO channel estimation error correcting section 710.

MIMO channel estimation error correcting section 710 corrects the channel estimation values (h11, h12, h21 and h22) outputted from MIMO channel estimation section 707 using the channel estimation errors (h11', h12', h21' and h22') outputted from channel estimation error detecting section 709, and outputs the corrected channel estimation values to space demultiplexing section 706.

Space demultiplexing section 706 demultiplexes all of the space-multiplexed received signals (i.e. the signals transmitted in MIMO, the pilot signals, the D-channel #1 and the D-channel #2) outputted from demultiplexing section 705, into antenna-specific streams for transmission in the transmitting apparatus, using the channel estimation values outputted from MIMO channel estimation error correcting section 710, and outputs the results to demultiplexing section 205.

By this means, according to Embodiment 4, the transmitting apparatus transmits different specific D-channels via a plurality of antennas and transmits the L-channel data by MIMO transmission, and the receiving apparatus performs channel compensation for the L-channels transmitted in MIMO, so that the D-channels can be used as pilot signals in MIMO transmission.

Moreover, although a case has been described with the present embodiment here where the number of antennas is two, the present invention is not limited to this, two or more antennas may be also applicable.

Moreover, although a case has been described with the present embodiment here where specific D-channels, which the transmitting apparatus transmits via one antenna each, are set for the number of antennas, one specific D-channel may be fixed over a plurality of different antennas on a per symbol basis.

Moreover, although cases have been described with the above embodiments where the modulation scheme for the specific D-channels are fixed to QPSK, the present invention is not limited to this, and PSK modulation with fixed amplitude, including BPSK, QPSK and offset PSK, may be used, or ASK modulation may be used whereby the phase upon modulation is fixed.

Moreover,althoughcaseshavebeen described with the above embodiments where the D-channels and the L-channels are used with two channels each, the present invention is not limited to this and each channel may be used with one channel or with two channels or more.

Moreover, the transmission scheme of the specific D-channels in the above embodiments may be available in the combination of the transmission schemes as appropriate.

Moreover, although the cases have been described with the above embodiments where data for the receiving apparatus is mapped to the L-channels, when data for the receiving apparatus is mapped to the D-channels other than the specific D-channels, similar to the cases of the L-channels, channel compensation may be performed using a channel estimation value subjected to channel estimation error correction.

Moreover, although with the above embodiments cases have been described where the present invention is configured by hardware, the present invention may be implemented by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC," "system LSI," "super LSI" or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The present application is based on Japanese Patent Application No.2005-228447, filed on August 5, 2005, the entire content of which is expressly incorporated by reference herein.

### Industrial Applicability

The wireless transmitting apparatus, wireless receiving apparatus and wireless communication method of the present invention have an advantage of improving channel estimation accuracy without increasing a pilot signal and are applicable to, for example, wireless communication base station apparatuses and wireless communication mobile station apparatuses.

## Claims

1. A radio transmitting apparatus comprising:
a fixed modulation section that modulates a first channel signal using discrete frequency bands as a physical channel, by a fixed modulation scheme;
a multiplexing section that time-frequency multiplexes the first channel signal that is modulated and a second channel signal using continuous frequency bands as a physical channel on a per symbol basis such that the first channel signal and the second channel signal exhibit a prefixed pattern; and
a transmitting section that transmits a signal multiplexed in the multiplexing section.

2. The radio transmitting apparatus according to claim 1, wherein the fixed modulation section adopts a phase shift keying modulation scheme with a fixed amplitude.

3. The radio transmitting apparatus according to claim 1, wherein the multiplexing section repeats multiplexing the same first channel signals over a plurality of transmit time intervals.

4. The radio transmitting apparatus according to claim 1, further comprising a duplicating section that duplicates a symbol modulated in the fixed modulation section,
wherein the multiplexing section multiplexes same duplicated symbols over the same orthogonal frequency division multiplexing symbol.

5. The radio transmitting apparatus according to claim 1, further comprising a first antenna and a second antenna,
wherein the multiplexing section generates the first sequence and the second sequence by separating the first channel signal subjected to modulation into the first sequence for the first antenna and the second sequence for the second antenna, on a per symbol basis, and multiplexes the first sequence and the second sequence over the second channel signal.

6. The radio transmitting apparatus according to claim 1, further comprising a first antenna and a second antenna, wherein:
the fixed modulation section modulates a first sequence and a second sequence of the first channel signal using the discrete frequency bands as a physical channel, by the fixed modulation scheme;
the multiplexing section separates the first sequence of the first channel signal subjected to modulation for the first antenna, separates the second sequence for the second antenna, and time-frequency multiplexes the signals of the sequences and the second channel signal using continuous frequency bands as the physical channel on a per symbol basis such that the first channel signal and the second channel signal exhibit a prefixed pattern; and
the transmitting section transmits a first multiplex signal where the first sequence is multiplexed via the first antenna and a second multiplex signal where the second sequence is multiplexed via the second antenna.

7. A radio receiving apparatus comprising:
a receiving section that receives a signal, in which a first channel signal modulated by a fixed modulation scheme and using discrete frequency bands as a physical channel, and a second channel signal using continuous frequency bands as a physical channel, are time-frequency multiplexed on a per symbol basis, such that the first channel signal and the second channel signal exhibit a prefixed pattern;
a channel estimation section that performs channel estimation;
a first channel compensation section that performs channel compensation for the first channel signal using a channel estimation value;
an error detecting section that makes a hard decision of a transmission signal point of the first channel signal subjected to the channel compensation, based on a fixed modulation scheme, and detects an error of the channel estimation value from a hard decision result; and
a second channel compensation section that performs channel compensation for the second channel signal using the channel estimation value subjected to the error detected is corrected.

8. The radio receiving apparatus according to claim 7, comprising:
a decoding section that performs error correction decoding for the first channel signal; and
a replica generating section that generates a replica of the first channel signal that is decoded, when an error is not found in a decoding result of the first channel signal,
wherein the error detecting section detects an error of a channel estimation value using the first channel signal subjected to channel compensation and the replica generated by the replica generating section.

9. The radio receiving apparatus according to claim 7, wherein, when the receiving section receives a signal in which same symbols are multiplexed over a same orthogonal frequency division multiplexing symbol, the error detecting section performs symbol combining on the same symbols and detects an error based on the combined symbol.

10. A wireless communication method comprising the steps of:
time-frequency multiplexing a first channel signal modulated by a fixed modulation scheme and a second channel signal that is different from the first channel signal on a per symbol basis, such that the first channel signal and the second channel signal exhibit a fixed pattern; and
transmitting the multiplex signal.
